# EUROPEAN PATENT SPECIFICATION

(11) **EP 3 307 482 B1**
(45) Date of publication and mention of the grant of the patent: **25.09.2019**
(21) Application number: 16729234.1
(22) Date of filing: 08.06.2016
(51) Int. Cl.: B24C 9/00, B24C 3/06, B24C 3/32, B08B 9/023, B23Q 11/00

(54) **CONTAINMENT SYSTEM**
EINSCHLUSSSYSTEM
SYSTÈME DE CONFINEMENT

(30) Priority: 09.06.2015 NO 20150747
(43) Date of publication of application: 18.04.2018
(73) Proprietor: Pinovo AS, 5225 Nesttun (NO)
(72) Inventor: NJAA, Torleiv, 5225 Nesttun (NO); SCHÖN, Hendrik, 5225 Nesttun (NO); THOMASSEN, Anders, 5225 Nesttun (NO)
(74) Representative: Plougmann Vingtoft a/s
(86) International application number: PCT/EP2016/062947
(87) International publication number: WO 2016/198419

(56) References cited:
- EP-A1- 0 306 104
- WO-A1-2014/092582
- DE-U1- 29 519 761
- US-A- 4 812 700
- US-A- 5 460 564
- US-A- 6 099 395
- US-A1- 2004 206 220
- US-A1- 2011 117 823
- US-A1- 2012 315 828

## Description

### FIELD OF THE INVENTION

The present invention relates to a containment system according to the preamble of independent claim 1 for providing a substantially dust-tight working space surrounding a work area, comprising: a flexible enclosure adapted to be assembled around the work area and provided with an outlet opening; a suction hose connected with the outlet opening of the flexible enclosure; a vacuum device connected with the suction hose to draw air from within the flexible enclosure; and an air inlet device adapted to introduce air into the flexible enclosure. Such a system is known from document US 6 099 395 A. The present invention further relates to a blasting system comprising a containment system and a flexible enclosure.

### BACKGROUND OF THE INVENTION

When performing maintenance work, such as abrasive blasting operations, it is often desirable to be able to reduce dissemination of particles, such as debris, dust or blasting media. To protect surrounding equipment, installations and nearby personnel, it is thus often necessary to build a containment system or enclosure around an area that needs to be maintained. Building such enclosures usually involves building a structure large enough to allow an operator to operate inside it. Enclosures of this type are often constructed from a large rigid frame covered by a membrane material. Construction of this type usually requires substantial resources to build and may delay or prolong operations. Furthermore enclosures comprising rigid frames generally make use of a blast nozzle to keep the containment system in equilibrium. Since the volume of air that exits through the funnel needs to be larger than the one that enters, to remove the blast media efficiently, without the presence of a rigid frame these enclosures would collapse. The need of rigid frame limits also the use of this type of enclosures to specific geometries or type of mainteinance work. Therefore there is a need for more versatile enclosures avoiding hindrace issues due to the presence of rigid frame and that can thus be used in any type of maintance work.

Abrasive blasting operations and other operations involving flying particles may also pose a serious liability to the operator performing the operation. Consequently, the operator is often forced to wear uncomfortable protective equipment, which may reduce mobility. In addition, flying particles and doses may pose a risk for nearby machinery. Furthermore, these emissions significantly limit the possibility to conduct other work near the abrasive blasting area.

Hence, an improved containment system would be advantageous, and in particular a containment system that protects the operator, the surrounding areas, and nearby personnel and, which can be easily setup.

### OBJECT OF THE INVENTION

An object of the present invention is to provide an alternative to the prior art. In particular, it may be seen as a further object of the present invention to provide a containment system that is fast and inexpensive to erect and can be easily adapted to various work sites.

### SUMMARY OF THE INVENTION

Thus, the above described object and several other objects are intended to be obtained in a first aspect of the invention by providing a containment system according to claim 1 for providing a substantially dust-tight working space surrounding a work area, comprising: a flexible enclosure adapted to be assembled around the work area and provided with an outlet opening; a suction hose connected with the outlet opening of the flexible enclosure; a vacuum device connected with the suction hose to draw air from within the flexible enclosure; and an air inlet device adapted to introduce air into the flexible enclosure; wherein the flexible enclosure in an assembled state comprises a main body section defining the substantially dust-tight working space, the main body section having a lower funnel-shaped section extending downwards and terminating in the outlet opening, and wherein the flexible enclosure is composed by one or more flexible sheets having a plurality of edges adapted to be assembled to provide the main body section.

The air inlet device is adapted to introduce compressed air into the flexible enclosure, thereby the containment system, which is a frameless containment system, is erected and is being kept erected by the introduction of compressed air.

In some embodiments, the air inlet device comprises a compressed air hose entering the flexible enclosure through the outlet opening, being a compressed air hose and air hose adapted to inflate compressed air.

This has the great advantage that, when in operation, the containment system is erected and is being kept erected by compressed air.

This has the great advantantage of providing a containment system that is frameless, i.e. does not comprise a rigid frame, e.g. when in operation it does not collapse if a rigid frame is not present, as the introduced compressed air inflates the containment system and keeps it erected during operation.

Hereby, a containment system that can easily be installed around work areas of different geometries, such as but not limited to pipes sections or steel structures, is provided. The containment system can be set up by a single person and the flexible enclosure may be disposed after use to reduce the time required to setup and remove the enclosure.

By a funnel-shaped section of the flexible enclosure is meant that the sides of the flexible enclosure are inclined and gradually incline toward each other when seen in the direction towards the outlet opening. The sides of the flexible enclosure thus provides a funnel or V-shaped hollow terminating in the outlet opening. The funnel provided by the side or sides of the flexible enclosure may be of both a general circular geometry or a geometry incorporating one or more edges or folds.

In a second aspect of the invention, the flexible enclosure may be composed by one or more, such as 2-4, flexible sheets joined along their edges to provide the flexible enclosure. Using multiple flexible sheets provides an enclosure that can be fitted around many different geometries and allow structures to extend through the substantially dust-tight working space and the enclosure. Preferably, the flexible sheets are transparent or at least partly transparent.

According to a third aspect of the invention, the edges of the one or more flexible sheets may be adapted to be joined onsite during assembly of the flexible enclosure around the work area. Additionally, some of the edges, such as the edges of the parts of the flexible sheets defining the lower funnel-shaped section, may be pre-joined prior to delivery of the flexible enclosure. The edges may also be adapted for being assembled around structures extending in and out of the working space, for example via magnetic means, such as one or more magnets or components comprising magnetic materials, located within the edges, to provide a substantially dust-tight connection.

According to a fourth aspect of the invention, the flexible enclosure may comprise one or more flexible access sleeves for accessing the working space defined by the flexible enclosure, the flexible sleeves extending from the main body section being provided with an opening, which may be opened and closed by folding back and forth a flap of the flexible sleeve material overlapping the opening.

According to a fifth aspect of the invention, the suction hose may comprise a distal section arranged in continuation of the outlet opening, the distal section having a reduced diameter (d) and being connected with the remaining suction hose via a connector provided with an external inlet opening fluidly connecting the suction hose with surrounding air. Hereby, the amount of vacuum provided by the suction hose on the flexible enclosure is automatically regulated as outside air is drawn in, if the pressure in the enclosure drops too much. This in turn prevents the flexible enclosure from collapsing due to too much air being sucked out. In addition, if the pressure in the enclosure increases too much, less outside air is drawn in, preventing the flexible enclosure from bursting.

Additionally, the flexible enclosure may be made from a polymer sheet material of a polyethylene composition comprising flame retardants and/or antistatic agents.

Further, the air inlet device may comprise a compressed air hose entering the flexible enclosure through the outlet opening.

The compressed air hose may comprise a diffuser provided at an outlet of the hose to diffuse the air exiting the hose. As the pressure of the compressed air supplied via the hose is about 6-7 bar, the air exits the compressed air hose with significant speeds, which creates undesirable noise and has the potential of damaging the flexible enclosure. The diffuser reduces the speed of the air thereby reducing noise associated with air leaving the hose and preventing damage of the flexible enclosure.

In some embodiments, the air inlet device has therefore to be suitable for accommodating a compressed air hose.

The compressed air hose is not a blasting hose.

While the blasting hose has the sole function of providing blasting material for mechanical abrasion, the compression air hose is adapted to withstand a flow of compressed air.

In some other embodiments, the compressed air hose has to be suitable for and has the function of deliverying compressed air having a pressure in the area between 2 and 10 bars, such as between 3 and 9 bars, for example between 4 and 8 bars, such as at 5 bars.

In some other embodiments, the compressed air hose entering the flexible enclosure through the outlet opening is contained in the suction hose.

The suction hose comprising the compressed air hose confines the compressed air hose inside the suction hose, thus the air compressed hose surrounded by the the suction hose is protected by eventual damages that may occur during transport or use.

In some embodiments, the tip of the air compressed hose delivering compressed air to the containment system is positioned at a desired distance from the outlet of the suction hose.

For example, the tip or outlet of the air compressed hose may be located at a desired distance between 1 and 20 cm, such as between 2 and 19 cm, such as between 3 and 18 cm, for example between 4 and 7 cm from the outlet of the suction hose.

Being the suction hose connected to the outlet opening of the flexible enclosure, the tip of the air compressed hose may be located at a desired distance between 1 and 20 cm, such as between 2 and 19 cm, such as between 3 and 18 cm, for example between 4 and 7 cm from the outlet opening of the flexible enclosure, towards the internal area of the flexible enclosure.

The positioning of the tip of the outlet of the air compressed hose within the flexible enclosure may optimize the equilibrium between compressed air intake and air leaving the flexible enclosure through the suction outlet.

The ratio between the cross section of the compressed air hose and the suction hose is optimized so as to allow for erecting and keeping erected the flexible enclosure only by air means, i.e. without the need of a further carring structure, such as a frame.

For example, the ratio between the diameter of the compressed air hose and the suction hose may be between 1:30 to 1:5, i.e. the diameter of the suctions hose may be between 5 and 30 times larger than the diameter of the compressed air hose. For example, the diameter of the compressed air hose may be between 2 and 12 mm, while the diameter of the suction hose may be between 25 and 75 mm.

In some embodiments, the suction hose and/or the compressed air hose comprise antistatic materials.

In some other embodiments, the suction hose and/or the compressed air hose consist of antistatic materials.

The use of antistatic materials for the suction hose and/or the compressed air hose has the advantage of avoiding or at least reducing the risk of creating sparks which could cause an explosion.

Moreover, the suction hose may be provided with an enclosure outlet connector comprising a locking mechanism adapted to releasably secure the flexible enclosure to the suction hose. For this purpose, the flexible enclosure may be provided with a disc shaped hose connector arranged with the outlet opening going through a central opening in the disc connector and the locking mechanism being adapted to receive the disc shaped hose connector to secure the flexible enclosure to the suction hose. Further, the locking mechanism may comprise a locking ring having one or more articulated ring pieces adapted to engage with the disc shaped hose connector to secure the flexible enclosure to the suction hose.

The invention further relates to an abrasive blasting system according to claim 17 for performing abrasive blasting operations, comprising a containment system as described above and an abrasive blasting device; the blasting device comprising a blasting unit provided with a blasting hose for providing pressurized blasting media to a blasting nozzle arranged inside the assembled flexible enclosure; and a recycling unit cooperating with the vacuum device of the containment system to receive used blasting media withdrawn from the flexible enclosure, wherein the recycling unit is adapted to separate reusable blasting media from the used blasting media and feed the reusable blasting media into the blasting unit.

By the combined use of a blasting system comprising a recycling unit and the above-described containment system a closed loop system is achieved wherein blasting media can be recycled without coming into contact with surroundings. This significantly reduces the complexity of blasting operations and reduces the impact on surroundings, nearby personnel, and the operator. Further, the use of blasting media can be reduced.

The above-described aspects of the present invention may each be combined with any of the other aspects. These and other aspects of the invention will be apparent from and elucidated with reference to the embodiments described hereinafter.

### BRIEF DESCRIPTION OF THE FIGURES

The containment system according to the invention will now be described in more detail with regard to the accompanying figures. The figures show one way of implementing the present invention and is not to be construed as being limiting to other possible embodiments falling within the scope of the attached claim set.
Figure 1 shows a schematic drawing representing a blasting system comprising a containment system,
Figure 2 shows the layout of one embodiment of a flexible enclosure comprising four flexible sheets,
Figure 3 shows the flexible enclosure of Fig. 2 in an assembled state providing a main body section defining a substantially dust-tight working space,
Figure 4 and 5 show a containment system comprising a flexible enclosure provided with access sleeves,
Figure 6 shows a plurality of flexible sheets adapted to be assembled to provide the flexible enclosure shown in Figure 7,
Figure 8a and 8b show details of the access sleeves of the flexible enclosure,
Figure 9a and 9b show the enclosure outlet connector and the cooperating hose connector for being mounted on the flexible enclosure around the outlet opening, and
Figure 10 shows a cross-section of the enclosure outlet connector and part of the suction hose.

### DETAILED DESCRIPTION OF AN EMBODIMENT

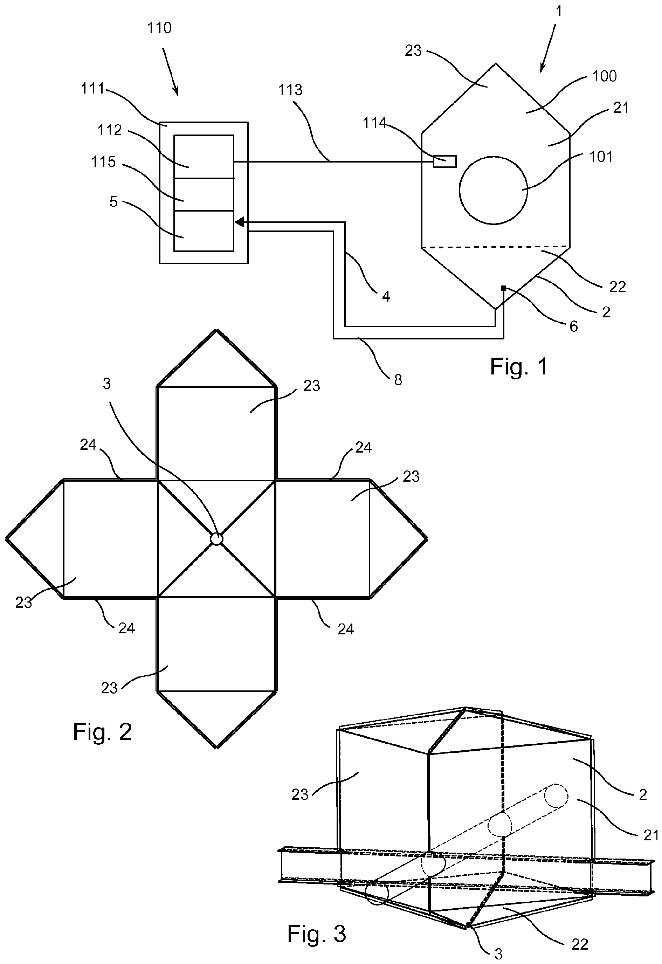

Fig. 1 illustrates an abrasive blasting system for performing abrasive blasting operations on a work area 101. The abrasive blasting system comprises a blasting device 111 and a containment system 1 for providing a substantially dust-tight working space 100 around the work area. The blasting device comprising a blasting unit 112 provided with a blasting hose 113 for providing pressurized blasting media to a blasting nozzle 114 arranged inside a flexible enclosure 2 of the containment system. Further, the blasting device is provided with a recycling unit 115, which via a vacuum device 5 receives used blasting media from the flexible enclosure for recycling.

The vacuum device 5 is connected to a suction hose 4 connected to the flexible enclosure to withdraw used blasting media from the flexible enclosure by providing a vacuum. Blasting media expelled from the blasting nozzle during blasting operations is thus collected inside the flexible enclosure and returned to the blasting device. The used blasting media is then processed by the recycling unit and reintroduced to the blasting unit for use in the blasting operation.

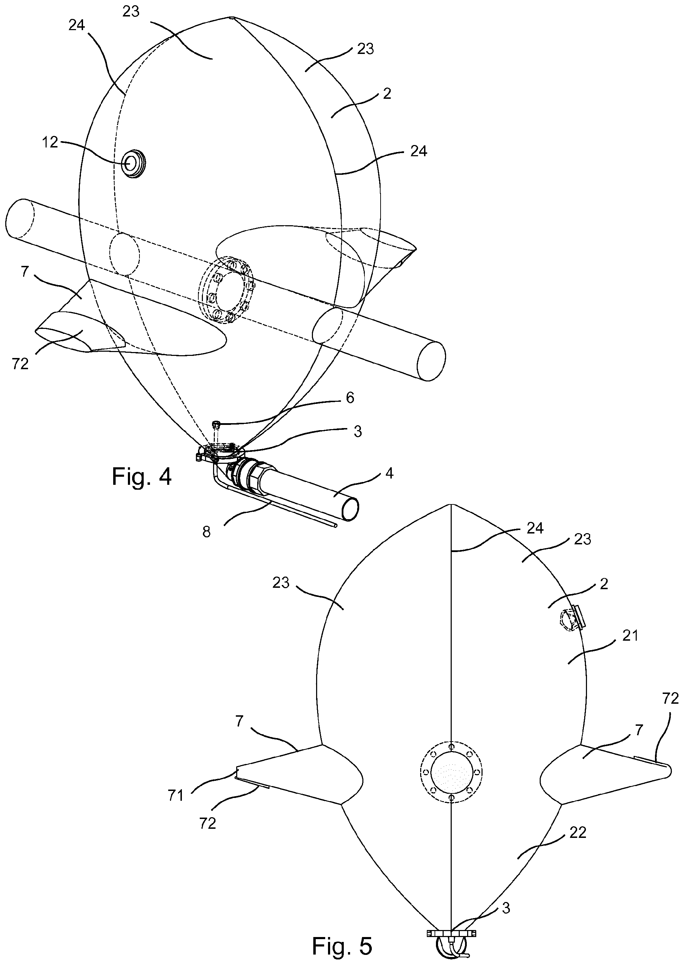

As described above the containment system comprises a flexible enclosure adapted to be assembled around the work area 101. As shown in Fig. 2, the flexible enclosure in an assembled state comprises a main body section 21 having a lower funnel-shaped section 22 extending downwards and terminating in an outlet opening 3. In Fig. 2 the flexible enclosure is shown to be composed by four flexible sheets having a plurality of edges adapted to be assembled to provide the main body section. However, the flexible enclosure may also be composed by fewer or more flexible sheets. Fig. 4 illustrates how the flexible enclosure may be composed by two flexible sheets, which are assembled to provide the main body section.

The containment system further comprises a vacuum device 5 provided with a suction hose 4 connected to the outlet opening 3 of the flexible enclosure. Hereby, air, dust, and blasting media may be drawn from within the flexible enclosure. To prevent the flexible enclosure from collapsing, an air inlet device 6 is provided to introduce air into the flexible enclosure. Air is thus simultaneously injected and sucked out of the flexible enclosure to prevent the pressure inside the enclosure from dropping, which would make the flexible enclosure collapse.

Returning to Fig. 3, it is seen how the flexible enclosure is assembled around a work area 101 and comprises a main body section 21 and a lower funnel-shaped section 22 terminating in an outlet opening 3 provided at a bottom of the flexible enclosure. To support the flexible enclosure in an assemble state, the flexible enclosure may be hung from a wire or string (not shown) mounted at a top part of the main body section, such as the highest point of the flexible enclosure shown in Fig. 3. Alternatively, the flexible enclosure may be supported by a wire or the like extending between opposite points of attachment and stretching through the flexible enclosure. From Fig. 3 it is further seen that the edges of the flexible enclosure may be assembled around structures, such as pipes or the like, that extend through the working space.

Fig. 4 and Fig. 5 shows a flexible enclosure assembled from two flexible sheets. The edges 24 of the opposite flexible sheets are assembled around pipes comprising a pipe flange requiring maintenance. The pipes thus enter the flexible enclosure where the edges 24 of the opposite flexible sheets are joined. Hereby, openings are provided in the flexible enclosure to accommodate structures, such as pipes, that may intersect the work area. The joining of the edges of the flexible sheets provides a substantial dust-tight connection around the pipes. If the connection between the pipe and the flexible sheets is not sufficiently tight, additional sealing means, such as tape, may be used to provide a substantially dust-tight connection.

In some embodiments, the additional sealing means are magnetic means, such as one or more magnets located, at least partially, along the openings edges of the the flexible enclosure so as to provide substantially dust-tight connection between the pipe and the flexible sheets.

The edges of the flexible sheets may be assembled by being adhered together. For this purpose, an adhering material such as glue or tape may be disposed on the edges. Hereby, the flexible enclosure can be assembled by simple joining and pressing together the edges 24. Other means may also be used for joining the edges, such as but not limited to hook and loop fasteners, zip-locks, zippers, buttons or reusable glue connections providing releasable joinable edges. Further, edges of the flexible enclosure may be joined on-site by welding.

The flexible enclosure may thus be a disposable device adapted for one time use only. Hereby, when an abrasive blasting operation or other maintenance operations have been terminated, the flexible enclosure is dismantled and disposed of. However, the edges may also be provided with means providing releasable joinable edges 24 to allow reuse or repositioning of the flexible enclosure.

In one embodiment the flexible sheets are made from a transparent polymer-based material. It is thus possible to see through the flexible enclosure during operation of the blasting nozzle or the like positioned inside the enclosure. More specifically the material may be a polyethylene composition comprising flame-retardants and/or antistatic agents. Antistatic or electrically dissipative properties may prevent dust from attaching to the inside of the flexible enclosure, hence, preserving visibility.

From Fig. 4 it is further seen that the flexible enclosure is provided with a viewing device 12 for providing improved visibility into the flexible enclosure. The viewing device is a reusable element, which can be demounted and re-used with another flexible enclosure. The viewing device may be provided with a lens for expanding the area inside the enclosure that can be seen through the lens.

In Fig. 4 it is further seen how the enclosure outlet connector 9 is connected with the flexible enclosure and the air inlet device comprises a compressed air hose 8 entering the enclosure through the outlet opening 3.

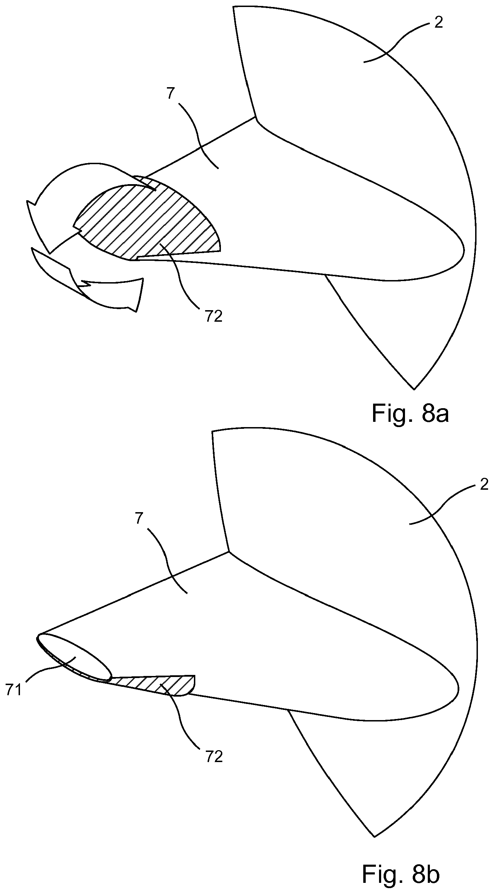

Fig. 4 and Fig. 5 also show flexible access sleeves for accessing the working space. The access sleeves are made of the same material as the flexible enclosure and integrated herewith as will be further described below. The flexible sleeves extend from the main body section and they are provided with an opening 71 for accessing the working space. Fig. 8a and 8b illustrates how the opening of a sleeve may be opened and closed by folding back and forth a flap 72 of the flexible sleeve material overlapping the opening. One edge of the flap is secured to the sleeve along the edge of the opening 71, and side edges of the flap are secured to the sleeve in a longitudinal direction thereof. Hereby, the flap together with the sleeve provides a pouch covering or containing the opening 71. To open the opening, the flap is folded around the edge of attachment along the opening 71. Hereby, the pouch is turned inside out and access to the opening is provided, as the opening is thus no longer inside the pouch.

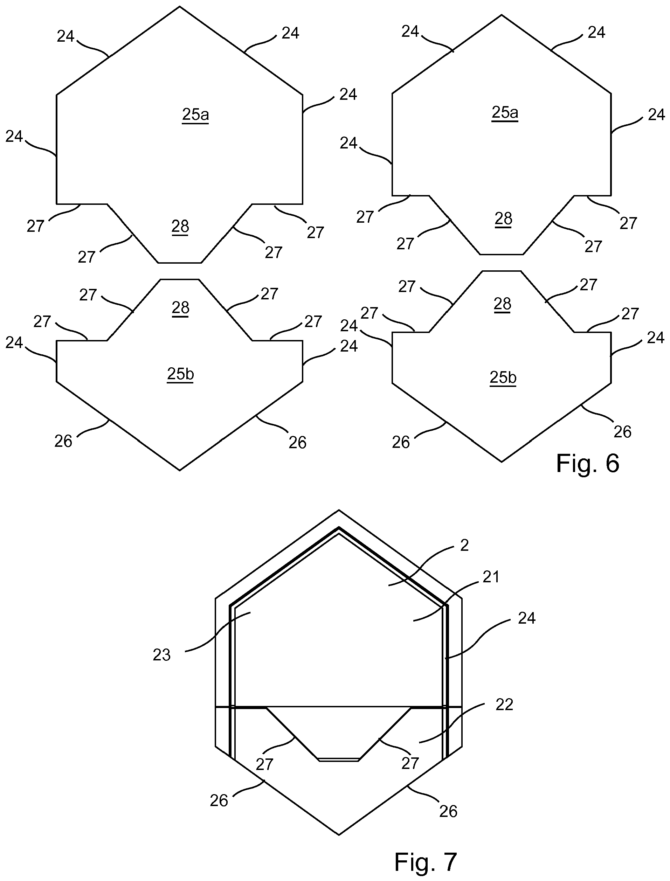

Referring to Fig. 6 and 7, in one embodiment the flexible enclosure is composed by two flexible sheets 23 each being assembled from a main body pieces of flexible sheets material 25a and a funnel section piece, 25b. Both pieces comprise a trapezoid shaped protrusion 28 extending downwards from the main body pieces 25a and upwards from the funnel section piece 25b, when viewed as presented in Fig. 6. When the edges 27 of the pieces of flexible sheet material 25a, 25b are joined, for example by welding or gluing, two separate flexible sheets are provided. The joining of the edges 27 of the trapezoid shaped protrusions 28 provides the access sleeves previously described. Further, the edges 26 of the parts of the flexible sheets defining the lower funnel-shaped section are adapted to be permanently joined, e.g. by welding, to provide the flexible enclosure. The remaining edges 24 of the flexible sheets are adapted for being joined during assembly of the flexible enclosure around the work area.

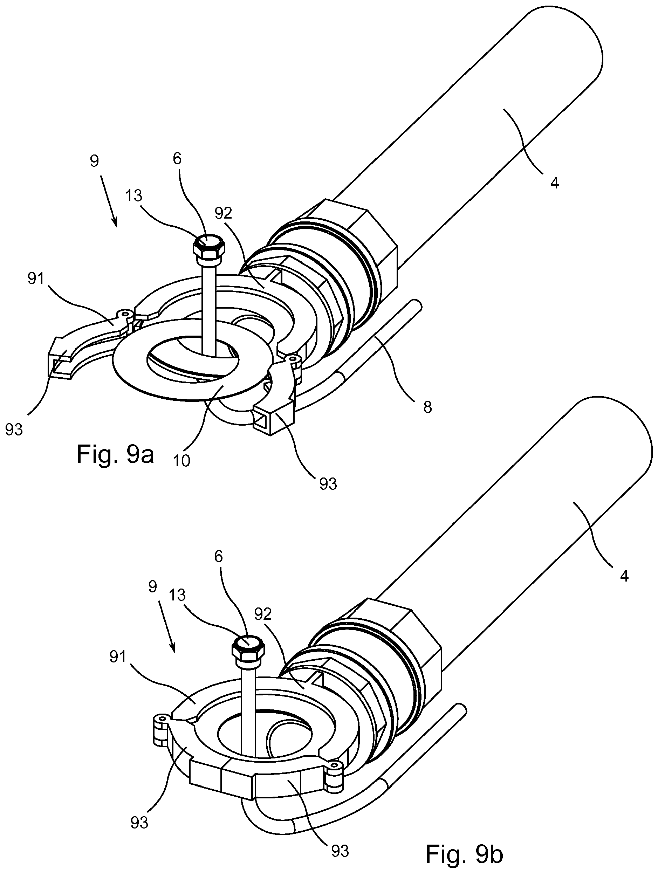

Fig. 9a and 9b show the enclosure outlet connector and the cooperating hose connector 10 mounted on the flexible enclosure around the outlet opening (flexible enclosure not shown). The enclosure outlet connector comprises a locking mechanism 91 for releasable securing the flexible enclosure 2 to the suction hose. The disc shaped hose connector 10 is arranged with the outlet opening going through the central opening 11. By securing the locking mechanism around the hose connector, the flexible enclosure is securely connected to the suction hose. The hose connector may be manufactured from a relatively rigid material such as plastic, metal, or cardboard, but not limited hereto.

In the shown embodiment, the locking mechanism comprises a locking ring 92 having two articulated ring pieces 93 adapted to engage with the disc shaped hose connector 10 to secure the flexible enclosure. However, the locking mechanism also may be designed in a number of other ways without departing from the invention.

From Fig. 9a and 9b, it is further seen that the air inlet device comprises a compressed air hose entering the flexible enclosure through the enclosure outlet connector and the outlet opening. The compressed air hose comprises a diffuser 13 provided at the outlet of the hose to diffuse the air exiting the hose.

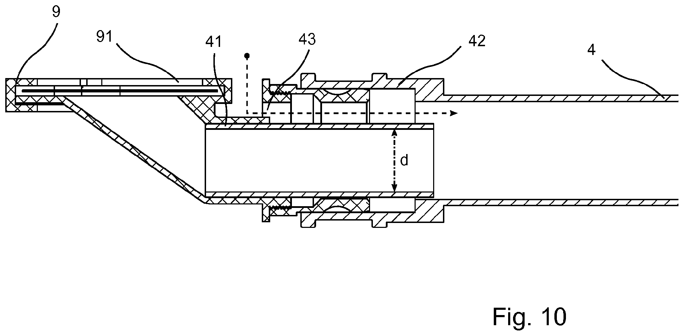

Fig. 10 shows a cross-section of the enclosure outlet connector 9 and part of the suction hose 4. The suction hose comprises a distal section 41 arranged in continuation of the outlet opening 3. The distal section has a reduced diameter (d) compared to the remaining suction hose. The distal section 41 is connected with the remaining suction hose 4 via a connector 42 provided with an external inlet opening 43 fluidly connecting the suction hose with surrounding air. Depending on the pressure inside flexible enclosure and the suction hose, air may thus be sucked into the suction hose during operation of the containment system. By allowing air to be sucked into the hose, the amount of vacuum provided by the suction hose on the flexible enclosure is automatically regulated.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. In addition, the mentioning of references such as "a" or "an" etc. should not be construed as excluding a plurality. The use of reference signs in the claims with respect to elements indicated in the figures shall also not be construed as limiting the scope of the invention.

## Claims

1. A containment system (1) for providing a substantially dust-tight working space (100) surrounding a work area (101), comprising:
- a flexible enclosure (2) adapted to be assembled around the work area and provided with an outlet opening (3);
- a suction hose (4) connected with the outlet opening of the flexible enclosure;
- a vacuum device (5) connected with the suction hose to draw air from within the flexible enclosure; and
- an air inlet device (6) adapted to introduce air into the flexible enclosure;
wherein the flexible enclosure in an assembled state comprises a main body section (21) defining the substantially dust-tight working space, the main body section having a lower funnel-shaped section (22) extending downwards and terminating in the outlet opening, and wherein the flexible enclosure is composed by one or more flexible sheets (23) having a plurality of edges (24) adapted to be assembled to provide the main body section,
**characterised in that** the air inlet device (6) is adapted to introduce compressed air into the flexible enclosure and said containment system is a frameless containment system.

2. A containment system (1) according to claim 1, wherein the flexible enclosure is composed by one or more flexible sheets (23), such as 2-4 flexible sheets (23), joined along their edges (24, 26) to provide the flexible enclosure.

3. A containment system (1) according to any of the claims 1 or 2, wherein the edges of the one or more flexible sheets are adapted to be joined onsite during assembly of the flexible enclosure around the work area.

4. A containment system (1) according to any of the preceding claims, wherein edges (26) of the parts of the flexible sheets defining the lower funnel-shaped section are pre-joined prior to delivery of the flexible enclosure.

5. A containment system (1) according to any of the preceding claims, wherein the edges of the flexible sheets are adapted for being assembled around structures extending in and out of the working space.

6. A containment system (1) according to any of the preceding claims, wherein the edges of the flexible sheets are adapted for being assembled around structures extending in and out of the working space, through magnetic means, located within the edges.

7. A containment system (1) according to any of the preceding claims, wherein the flexible enclosure comprises one or more flexible access sleeves (7) extending from the main body section and being adapted for accessing the working space defined by the flexible enclosure, the flexible sleeves being provided with an opening (71), which may be opened and closed by folding back and forth a flap (72) of the flexible sleeve material overlapping the opening.

8. A containment system (1) according to any of the preceding claims, wherein the suction hose comprises a distal section (41) arranged in continuation of the outlet opening, the distal section having a reduced diameter (d) and being connected with the remaining suction hose via a connector (42) provided with an external inlet opening (43) fluidly connecting the suction hose with surrounding air to regulate an amount of vacuum provided by the suction hose on the flexible enclosure.

9. A containment system (1) according to any of the preceding claims, wherein the flexible enclosure is made from a polymer sheet material of a polyethylene composition comprising flame-retardants and/or antistatic agents.

10. A containment system (1) according to any of the preceding claims, wherein the air inlet device comprises a compressed air hose (8) entering the flexible enclosure through the outlet opening.

11. A containment system (1) according to claim 10, wherein the compressed air hose entering the flexible enclosure through the outlet opening is contained in the suction hose (4).

12. A containment system (1) according to claim 10, wherein the compressed air hose comprises a diffuser (13) provided at an outlet of the hose to diffuse the air exiting the hose.

13. A containment system (1) according to any of the preceding claims, wherein the suction hose is provided with an enclosure outlet connector (9) comprising a locking mechanism (91) adapted to releasably secure the flexible enclosure to the suction hose.

14. A containment system (1) according to claim 9, wherein the flexible enclosure comprises a disc shaped hose connector (10) arranged with the outlet opening going through a central opening (11) in the disc connector and the locking mechanism being adapted to receive the disc shaped hose connector to secure the flexible enclosure to the suction hose.

15. A containment system (1) according to any of the preceeding claims 9-13, wherein the suction hose (4) and/or the compressed air hose (8) comprise antistatic materials.

16. A containment system (1) according to any of the preceeding claims 9-14, wherein the suction hose (4) and/or the compressed air hose (8) consist of antistatic materials.

17. An abrasive blasting system (110) for performing abrasive blasting operations, comprising a containment system (1) as described in any of the claims 1-16; and a blasting device (111); the blasting device comprising a blasting unit (112) provided with a blasting hose (113) for providing pressurized blasting media to a blasting nozzle (114) arranged inside the assembled flexible enclosure.

18. An abrasive blasting system (110) according to claim 17, further comprising a recycling unit (115) cooperating with the vacuum device of the containment system to receive used blasting media withdrawn from the flexible enclosure, wherein the recycling unit is adapted to separate reusable blasting media from the used blasting media and feed the reusable blasting media into the blasting unit.

## Patentansprüche

1. Eingrenzungssystem (1) zum Bereitstellen eines im Wesentlichen Staub-dichten Arbeitsraums (100), der einen Arbeitsbereich (101) umgibt, umfassend:
- eine flexible Einhausung (2), die eingerichtet ist, um um den Arbeitsbereich zusammengebaut zu werden, und mit einer Auslassöffnung (3) bereitgestellt ist;
- einen Saugschlauch (4), der mit der Auslassöffnung der flexiblen Einhausung verbunden ist;
- eine Vakuumvorrichtung (5), die mit dem Saugschlauch verbunden ist, um Luft von Innerhalb der flexiblen Einhausung zu ziehen; und
- eine Lufteinlassvorrichtung (6), die eingerichtet ist, um Luft in die flexible Einhausung einzuführen;
wobei die flexible Einhausung in einem zusammengebauten Zustand eine Hauptkörpersektion (21) umfasst, die den im Wesentlichen Staub-dichten Arbeitsraum definiert, wobei die Hauptkörpersektion eine untere trichterförmige Sektion (22) aufweist, die sich nach unten erstreckt und in der Auslassöffnung endet, und wobei die flexible Einhausung mittels eines oder mehrerer flexibler Platten (23) gebildet ist, die eine Vielzahl von Kanten (24) aufweisen, die eingerichtet sind, um zusammengebaut zu werden, um die Hauptkörpersektion bereitzustellen, **dadurch gekennzeichnet, dass** die Lufteinlassvorrichtung (6) eingerichtet ist, um komprimierte Luft in die flexible Einhausung einzuführen und wobei das Eingrenzungssystem ein rahmenloses Eingrenzungssystem ist.

2. Eingrenzungssystem (1) nach Anspruch 1, wobei die flexible Einhausung mittels einer oder mehrerer flexibler Platten (23) gebildet ist, wie beispielsweise 2 - 4 flexiblen Platten (23), verbunden entlang ihrer Kanten (24, 26), um die flexible Einhausung bereitzustellen.

3. Eingrenzungssystem (1) nach einem der Ansprüche 1 oder 2, wobei die Kanten der einen oder der mehreren Platten eingerichtet sind, um vor Ort während des Zusammenbaus der flexiblen Einhausung um den Arbeitsbereich verbunden zu werden.

4. Eingrenzungssystem (1) nach einem der vorstehenden Ansprüche wobei Kanten (26) der Teile der flexiblen Platten, die die untere trichterförmige Sektion definieren, vorverbunden sind vor der Lieferung der flexiblen Einhausung.

5. Eingrenzungssystem (1) nach einem der vorstehenden Ansprüche, wobei die Kanten der flexiblen Platten eingerichtet sind, um um Strukturen zusammengebaut zu werden, die sich in und aus dem Arbeitsraum erstrecken.

6. Eingrenzungssystem (1) nach einem der vorstehenden Ansprüche, wobei die Kanten der flexiblen Platten eingerichtet sind, um um Strukturen zusammengebaut zu werden, die sich in und aus dem Arbeitsraum erstrecken durch magnetische Mittel, lokalisiert innerhalb der Kanten.

7. Eingrenzungssystem (1) nach einem der vorstehenden Ansprüche, wobei die flexible Einhausung eine oder mehrere flexible Zugangshülsen (7) umfasst, die sich von der Hauptkörpersektion erstrecken und eingerichtet sind für Zugang zu dem Arbeitsraum, definiert mittels der flexiblen Einhausung, wobei die flexiblen Hülsen bereitgestellt sind mit einer Öffnung (71), die geöffnet und geschlossen werden kann mittels Vor- und Zurückfaltens einer Klappe (72) des flexiblen Hülsenmaterials, das die Öffnung überlappt.

8. Eingrenzungssystem (1) nach einem der vorstehenden Ansprüche, wobei der Saugschlauch eine distale Sektion (41) umfasst, die in Fortsetzung der Auslassöffnung angeordnet ist, wobei die distale Sektion einen reduzierten Durchmesser (d) aufweist und mit dem restlichen Saugschlauch über einen Verbinder (42), der mit einer externen Einlassöffnung (43) bereitgestellt ist, die fluidisch den Saugschlauch mit umgebender Luft verbindet, verbunden ist, um eine Menge an Vakuum zu regulieren, die mittels des Saugschlauchs auf der flexiblen Einhausung bereitgestellt ist.

9. Eingrenzungssystem (1) nach einem der vorstehenden Ansprüche, wobei die flexible Einhausung aus einem Polymerplattenmaterial einer Polyethylenkomposition gemacht ist, die Flammenhemmer und/oder Antistatika umfasst.

10. Eingrenzungssystem (1) nach einem der vorstehenden Ansprüche, wobei die Lufteinlassvorrichtung einen komprimierten Luftschlauch (8) umfasst, der in die flexible Einhausung durch die Auslassöffnung eintritt.

11. Eingrenzungssystem (1) nach Anspruch 10, wobei der komprimierte Luftschlauch, der in die flexible Einhausung durch die Auslassöffnung eintritt, in dem Saugschlauch (4) enthalten ist.

12. Eingrenzungssystem (1) nach Anspruch 10, wobei der komprimierte Luftschlauch einen Diffusor (13) umfasst, der an einem Auslass des Schlauchs bereitgestellt ist, um die Luft, die den Schlauch verlässt, zu diffundieren.

13. Eingrenzungssystem (1) nach einem der vorstehenden Ansprüche, wobei der Saugschlauch mit einem Einhausungsauslassverbinder (9) bereitgestellt ist, der einen Verriegelungsmechanismus (91) umfasst, der eingerichtet ist, um lösbar die flexible Einhausung an dem Saugschlauch zu sichern.

14. Eingrenzungssystem (1) nach Anspruch 9, wobei die flexible Einhausung einen scheibenförmigen Schlauchverbinder (10) umfasst, der mit der Auslassöffnung durch eine zentrale Öffnung (11) in dem Scheibenverbinder gehend angeordnet ist, und wobei der Verriegelungsmechanismus eingerichtet ist, um den scheibenförmigen Schlauchverbinder zu empfangen, um die flexible Einhausung an dem Saugschlauch zu sichern.

15. Eingrenzungssystem (1) nach einem der vorstehenden Ansprüche 9 - 13, wobei der Saugschlauch (4) und/oder der komprimierte Luftschlauch (8) antistatische Materialien umfassen.

16. Eingrenzungssystem (1) nach einem der vorstehenden Ansprüche 9 - 14, wobei der Saugschlauch (4) und/oder der komprimierte Luftschlauch (8) aus antistatischen Materialien bestehen.

17. Strahlanlage (110) für Strahloperationen, umfassend ein Eingrenzungssystem (1), wie in einem der Ansprüche 1 - 16 beschrieben; und eine Strahlvorrichtung (111); wobei die Strahlvorrichtung eine Strahleinheit (112) umfasst, die mit einem Strahlschlauch (113) zum Bereitstellen von Strahlmedien unter Druck an eine Strahldüse (114) bereitgestellt ist, angeordnet innerhalb der zusammengebauten flexiblen Einhausung.

18. Strahlsystem (110) nach Anspruch 17, weiter umfassend eine Recyclingeinheit (115), die mit der Vakuumvorrichtung des Eingrenzungssystems kooperiert, um gebrauchte Strahlmedien zu empfangen, die von der flexiblen Einhausung entfernt werden, wobei die Recyclingeinheit eingerichtet ist, um wiederverwendbare Strahlmedien von den gebrauchten Stahlmedien zu trennen und wiederverwendbare Strahlmedien in die Strahleinheit zu speisen.

## Revendications

1. Système de confinement (1) pour fournir un espace de travail (100) essentiellement étanche aux poussières entourant une zone de travail (101), comprenant :
- une enceinte flexible (2) adaptée pour être assemblée autour de la zone de travail et dotée d'une ouverture de sortie (3) ;
- un tuyau d'aspiration (4) connecté à l'ouverture de sortie de l'enceinte flexible ;
- un dispositif sous vide (5) connecté au tuyau d'aspiration pour aspirer l'air de l'intérieur de l'enceinte flexible ; et
- un dispositif d'entrée d'air (6) adapté pour introduire de l'air jusque dans l'enceinte flexible ;
dans lequel l'enceinte flexible, dans un état assemblé, comprend une section de corps principal (21) définissant l'espace de travail essentiellement étanche aux poussières, la section de corps principal ayant une section inférieure en forme d'entonnoir (22) s'étendant vers le bas et finissant dans l'ouverture de sortie, et dans lequel l'enceinte flexible est composée d'une ou plusieurs feuille(s) flexible(s) (23) ayant une pluralité de bords (24) adaptés pour être assemblés pour fournir la section de corps principal,
**caractérisé en ce que** le dispositif d'entrée d'air (6) est adapté pour introduire de l'air comprimé jusque dans l'enceinte flexible et ledit système de confinement est un système de confinement sans cadre.

2. Système de confinement (1) selon la revendication 1, dans lequel l'enceinte flexible est composée d'une ou plusieurs feuille(s) flexible(s) (23), telles que 2-4 feuilles flexibles (23), jointes le long de leurs bords (24, 26) pour fournir l'enceinte flexible.

3. Système de confinement (1) selon l'une quelconque des revendications 1 ou 2, dans lequel les bords de l'une ou plusieurs feuille(s) flexible(s) sont adaptés pour être joints sur site pendant le montage de l'enceinte flexible autour de la zone de travail.

4. Système de confinement (1) selon l'une quelconque des revendications précédentes, dans lequel les bords (26) des parties des feuilles flexibles définissant la section inférieure en forme d'entonnoir sont pré-joints avant la fourniture de l'enceinte flexible.

5. Système de confinement (1) selon l'une quelconque des revendications précédentes, dans lequel les bords des feuilles flexibles sont adaptés pour être assemblés autour de structures s'étendant dans et hors de l'espace de travail.

6. Système de confinement (1) selon l'une quelconque des revendications précédentes, dans lequel les bords des feuilles flexibles sont adaptés pour être assemblés autour de structures s'étendant dans et hors de l'espace de travail, par des moyens magnétiques, situés à l'intérieur des bords.

7. Système de confinement (1) selon l'une quelconque des revendications précédentes, dans lequel l'enceinte flexible comprend un ou plusieurs manchon(s) d'accès flexible(s) (7) s'étendant à partir de la section de corps principal et étant adaptés pour accéder à l'espace de travail défini par l'enceinte flexible, les manchons flexibles étant dotés d'une ouverture (71) qui peut être ouverte et fermée en repliant vers l'arrière et vers l'avant un volet (72) du matériau de manchon flexible chevauchant l'ouverture.

8. Système de confinement (1) selon l'une quelconque des revendications précédentes, dans lequel le tuyau d'aspiration comprend une section distale (41) agencée en continuation de l'ouverture de sortie, la section distale ayant un diamètre réduit (d) et étant connectée au tuyau d'aspiration restant par le biais d'un connecteur (42) doté d'une ouverture d'entrée externe (43) reliant fluidiquement le tuyau d'aspiration avec l'air environnant pour réguler une quantité de vide fournie par le tuyau d'aspiration sur l'enceinte flexible.

9. Système de confinement (1) selon l'une quelconque des revendications précédentes, dans lequel l'enceinte flexible est faite d'un matériau de feuille polymère d'une composition de polyéthylène comprenant des agents ignifuges et/ou antistatiques.

10. Système de confinement (1) selon l'une quelconque des revendications précédentes, dans lequel le dispositif d'entrée d'air comprend un tuyau d'air comprimé (8) entrant dans l'enceinte flexible par l'ouverture de sortie.

11. Système de confinement (1) selon la revendication 10, dans lequel le tuyau d'air comprimé entrant dans l'enceinte flexible par l'ouverture de sortie est contenu dans le tuyau d'aspiration (4).

12. Système de confinement (1) selon la revendication 10, dans lequel le tuyau d'air comprimé comprend un diffuseur (13) prévu à une sortie du tuyau pour diffuser l'air sortant du tuyau.

13. Système de confinement (1) selon l'une quelconque des revendications précédentes, dans lequel le tuyau d'aspiration est doté d'un connecteur de sortie d'enceinte (9) comprenant un mécanisme de verrouillage (91) adapté pour fixer l'enceinte flexible au tuyau d'aspiration de manière séparable.

14. Système de confinement (1) selon la revendication 9, dans lequel l'enceinte flexible comprend un connecteur de tuyau en forme de disque (10) agencé avec l'ouverture de sortie allant à travers une ouverture centrale (11) dans le connecteur à disque et le mécanisme de verrouillage étant adapté pour recevoir le connecteur en forme de disque pour fixer l'enceinte flexible au tuyau d'aspiration.

15. Système de confinement (1) selon l'une quelconque des revendications précédentes 9-13, dans lequel le tuyau d'aspiration (4) et/ou le tuyau d'air comprimé (8) comprend/comprennent des matériaux antistatiques.

16. Système de confinement (1) selon l'une quelconque des revendications précédentes 9-14, dans lequel le tuyau d'aspiration (4) et/ou le tuyau d'air comprimé (8) est/sont constitué(s) de matériaux antistatiques.

17. Système de projection abrasive (110) pour effectuer des opérations de projection abrasive, comprenant un système de confinement (1) tel que décrit selon l'une quelconque des revendications 1-16 ; et un dispositif de projection (111) ; le dispositif de projection comprenant une unité de projection (112) dotée d'un tuyau de projection (113) pour fournir un agent de projection pressurisé à une buse de projection (114) agencée à l'intérieur de l'enceinte flexible assemblée.

18. Système de projection abrasive (110) selon la revendication 17, comprenant en outre une unité de recyclage (115) coopérant avec le dispositif de vide du système de confinement pour recevoir l'agent de projection utilisé retiré de l'enceinte flexible, dans lequel l'unité de recyclage est adaptée pour séparer l'agent de projection réutilisable de l'agent de projection utilisé et pour alimenter l'agent de projection réutilisable dans l'unité de projection.
